# EUROPEAN PATENT APPLICATION

(11) **EP 2 293 425 A2**
(43) Date of publication of application: **09.03.2011**
(21) Application number: 10173229.5
(22) Date of filing: 18.08.2010
(51) Int. Cl.: H02M 7/02

(54) **Vehicular alternator, and rectifier of vehicular alternator**

(30) Priority: 08.09.2009 JP 2009207056
(71) Applicant: Hitachi Automotive Systems, Ltd., Hitachinaka-shi Ibaraki 312-8503 (JP)
(72) Inventor: Saito, Masato, Ibaraki 312-8503 (JP); Kokubun, Shuichi, Ibaraki 312-8503 (JP); Masumoto, Shoju, Ibaraki 312-0062 (JP)
(74) Representative: MERH-IP Matias Erny Reichl Hoffmann

(57) **Abstract**

A rectifier 2 of vehicular alternator that rectifies AC electrical power into DC electrical power comprises: a rectifier 110 that includes a plurality of MOS FETs 8, 9 that are used as rectifier elements; a control circuit 31 that applies drive signals to the gates of the plurality of MOS FETs via gate drive signal lines 14, 15, and that thereby commands continuity and discontinuity of the plurality of MOS FETs 8, 9; and a plurality of load circuits 10, 11, one connected between the gate and the source of each of the MOS FETs 8, 9, for bleeding down electric charge accumulated by gate capacitance of the MOS FET 8, 9 if the gate drive signal line 14, 15 is interrupted.

## Description

### INCORPORATION BY REFERENCE

The disclosure of the following priority application is herein incorporated by reference: Japanese Patent Application No. 2009-207056 filed September 8, 2009

The present invention relates to a vehicular alternator that uses MOS FETs as rectifier elements, and to a rectifier for a vehicular alternator.

In an electricity generation system, AC electrical power generated by an armature winding of an AC generator is rectified by a full-wave rectifier. In the past, full-wave rectifiers of this type employing diodes have been commonly known. However in recent years, in order to reduce losses, full-wave rectifiers that employ MOS FETs instead of diodes have been proposed. (For example, refer to Patent Document #1).

Now, with a full-wave rectifier that employs MOS FETs, since the amount of heat generated by a full-wave rectifier circuit that includes the MOS FETs is large, it has been necessary to provide a MOS FET control circuit that typically includes electronic components such as a micro-computer and so on whose heat resistance is poor in a chassis that is separate from that of the full-wave rectifier circuit; in other words, it has been necessary to thermally separate the full-wave rectifier circuit and the MOS FET control circuit. And, in order to transmit gate drive signals from the MOS FET control circuit that is housed in its own separate chassis to the full-wave rectifier circuit, gate drive signal lines have been connected between the chassis in which the MOS FET control circuit is housed and the chassis in which the full-wave rectifier circuit is housed.
Patent Document #1: Japanese Laid-Open Patent Publication 2004-7964

However, in the case of a vehicular alternator, the MOS FET control circuit and the full-wave rectifier circuit are directly attached to a chassis for fixing the AC generator to the engine. Due to this, the MOS FET control circuit and the full-wave rectifier circuit are subjected both to the vibration of the engine and also to the vibration of the AC generator itself, and there is a danger that the gate drive signal lines may break under the influence of this vibration. If a gate drive signal line breaks, then the gate potential of the corresponding MOS FET goes into an unstable state (i.e. floating), and sometimes it may happen that the MOS FET remains in the ON state. If one of two MOS FETs that are connected in series remains in the ON state in this manner, then the problem arises that, when the other MOS FET is ON, the series connection of the MOS FETs is in a short-circuited state, and this is extremely undesirable.

A rectifier of vehicular alternator according to a 1 st aspect of the present invention that rectifies AC electrical power into DC electrical power comprises: a rectifier that includes a plurality of MOS FETs that are used as rectifier elements; a control circuit that applies drive signals to the gates of the plurality of MOS FETs via gate drive signal lines, and that thereby commands continuity and discontinuity of the plurality of MOS FETs; and/or a plurality of load circuits, one connected between the gate and the source of each of the MOS FETs, for bleeding down electric charge accumulated by gate capacitance of the MOS FET if the gate drive signal line is interrupted.

According to a 2nd aspect of the present invention, in the rectifier of vehicular alternator according to the 1 st aspect, it is preferred that each of the load circuits comprises a resistor; and the resistance values of the resistors are set so that the time constants that are defined by the products of the resistance values of the resistors and the gate capacitances of their corresponding MOS FETs are smaller than half the period of the phase voltage cycles when the vehicle AC generator is rotating at its maximum rotational speed, and moreover so that the loss in each of the resistors when the drive signal is applied is less than a predetermined maximum permitted loss.

According to a 3rd aspect of the present invention, in the rectifier of vehicular alternator according to the 2nd aspect, it is preferred that the predetermined maximum permitted loss is the difference between the rectification loss when diodes are used as the rectifier elements, and the rectification loss when MOS FETs are used as the rectifier elements.

According to a 4th aspect of the present invention, in the rectifier of vehicular alternator according to the 2nd aspect, it is also preferred that the resistance values of the resistors are set so as to satisfy 500Ω<R<50kΩ.

A vehicular alternator according to a 5th aspect of the present invention comprises: the rectifier of the 1st aspect; a stator upon which an armature winding is provided; a rotor upon which a field winding is provided; a bracket fixed to the vehicle, for supporting the stator and the rotor; a first cabinet that is fixed to the bracket, to which the rectifier and gate drive signal input terminals are provided; and a second cabinet that is fixed to the bracket, to which the control circuit and gate drive signal output terminals are provided. In this vehicular alternator, it is preferred that the gate drive signal input terminals and the gate drive signal output terminals are connected together by the gate drive signal lines.

According to the present invention, it is possible to anticipate enhancement of the reliability of a vehicular alternator, and of a rectifier of vehicular alternator.

### BRIEF DESCRIPTION OF THE DRAWINGS

Fig. 1 is a figure showing the general structure of a vehicle drive system that is equipped with a vehicular alternator;
Fig. 2 is a sectional view showing the overall structure of the vehicular alternator;
Fig. 3 is a circuit diagram showing a charging system of the vehicular alternator;
Fig. 4 is a figure showing a control device assembly 31 as seen from the side of a cover 26;
Fig. 5 is a figure showing a portion of a full-wave rectifier 2 as seen from the side of the cover 26;
Fig. 6 is a sectional view showing the way in which gate drive signal lines 14 and 15 are connected; and
Fig. 7 is a circuit diagram showing another charging system for a vehicular alternator, in which two MOS FETs are connected in parallel.

### DESCRIPTION OF THE PREFERRED EMBODIMENT

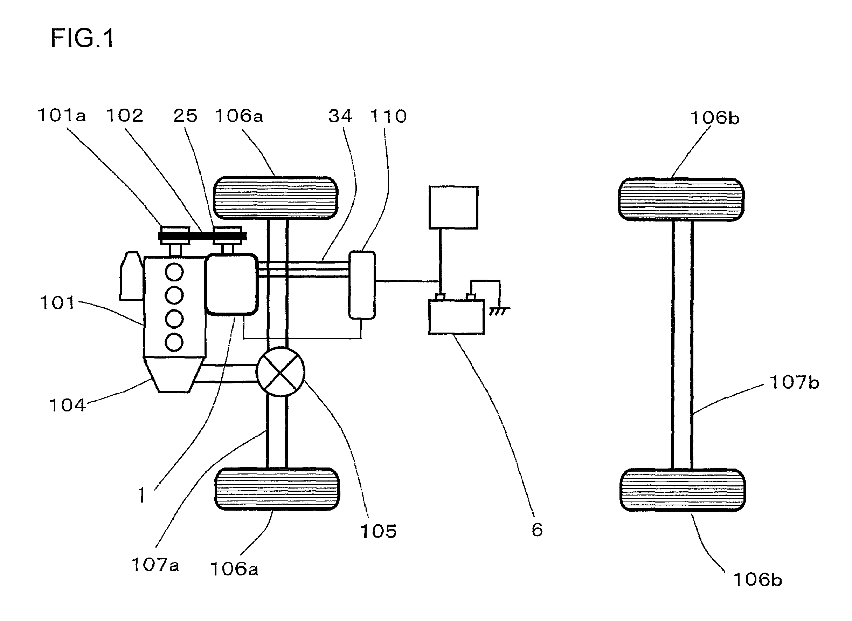

In the following, an embodiment for implementation of the present invention will be explained. Fig. 1 is a figure showing the general structure of a vehicle drive system that is equipped with the vehicle AC generator of this embodiment. As power source, this vehicle drive system utilizes an engine 101 that is an internal combustion engine. The rotational drive force of the engine 101 is transmitted to front wheels 106a via a speed change mechanism 104, a differential mechanism 105, and a front wheel shaft 107a. In Fig. 1, the reference symbols 106b are the rear wheels and the reference symbol 107b is a rear wheel shaft.

The vehicle AC generator 1 (hereinafter referred to as the AC generator 1) is attached to the engine 101, and is mechanically linked to the engine 101 via a belt 102 that is fitted around a pulley 101 a upon the engine 101 and around a pulley 25 upon the AC generator 1. The rotational drive force of the engine 101 is transmitted to the AC generator 1 by this arrangement. Moreover, the AC generator 1 also has a function of acting as an electric motor that applies rotational drive force to the engine 101, and, in this case, rotational drive force produced by the AC generator 1 is transmitted to the engine 101.

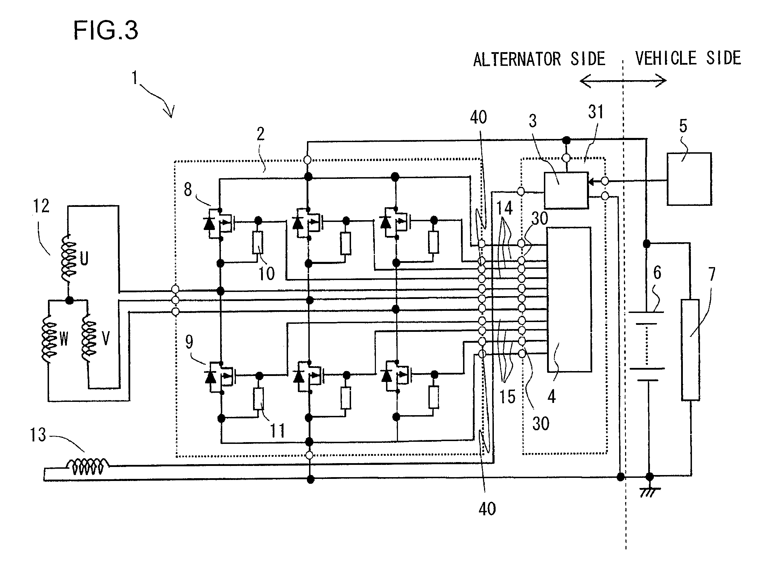

The reference symbol 110 denotes a rectifier that includes a full-wave rectifier 2, a field control device 3, and a MOS FET control device 4, none of which are shown in Fig. 1 while they may be seen in Fig. 3. It should be understood that while, in Fig. 1, the AC generator 1 and the rectifier 110 are shown as being separated, actually, as described hereinafter, the AC generator 1 and the rectifier 110 are provided as integrally combined.

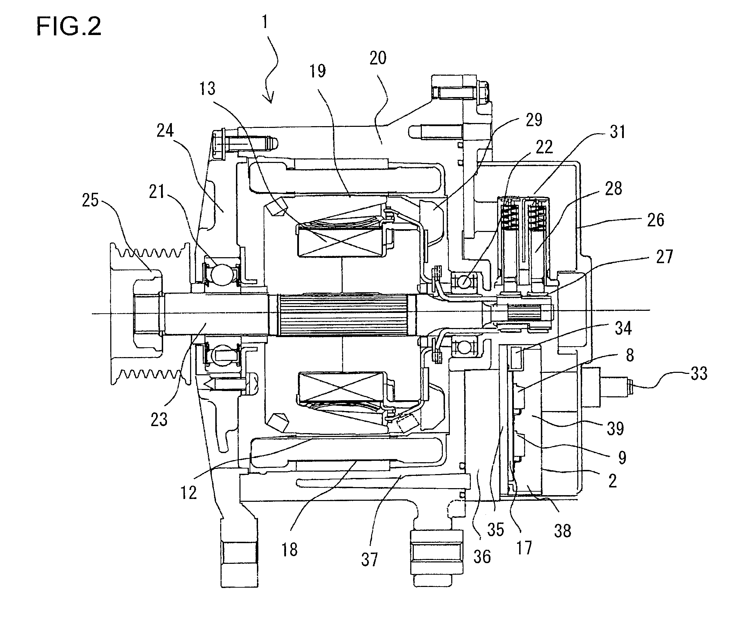

Fig. 2 is a sectional view showing the overall structure of the AC generator 1. It should be understood that the following explanation of Fig. 2 will be expressed in terms of the direction that corresponds to the left to right direction in the figure being termed the "axial" direction, the positional relationship of one element being to the left of another in the figure being expressed as being "in front" or "before", and the positional relationship of one object being to the right of another in the figure being expressed as being "behind". This AC generator 1 includes a center bracket 20, a front bracket 24, a rear plate 36, a stator 18 and a rotor 19 that are provided within the center bracket 20, and the full-wave rectifier 2 and a control device assembly 31 that are provided upon the rear plate 36.

A field winding 13 is wound upon the rotor 19, and the rotor 19 is fixed to a shaft 23. This shaft 23 is freely rotatably supported in bearings 21 and 22 that are respectively fitted in the front bracket 24 and the center bracket 20. A fan 29 for cooling the field winding 13 is provided on the rear end of the rotor 19. When the rotor 19 and the fan 29 rotate integrally together, a cooling draft is created and thereby the field winding 13 is cooled.

A cover 26, in the external circumferential portion of which opening portions are formed, is fitted to the rear end of the AC generator 1. When the fan 29 rotates, a cooling draft flows in from the opening portions of this cover 26. This cooling draft also flows into the interior of the center bracket through opening portions that are provided in the axially central portion of the rear side of the center bracket 20. And, after having cooled the field winding 13, this flowing in cooling draft flows out to the exterior through an opening portion that is provided in the front bracket 24.

The front end of the shaft 23 passes through the front bracket 24 and projects to the exterior, and the pulley 25 is fixed to its end portion by a nut. As shown in Fig. 1, this pulley 25 is mechanically linked to the output shaft of the engine 104 by the belt 102 so as to transmit rotational drive force from the engine 101 to the AC generator 1, and so as to transmit rotational drive force generated by the AC generator 1 to the engine 101.

On the other hand, the rear end of the shaft 23 passes through the center bracket 20 and projects backwards towards the cover 26 at the rear. Two slip rings 27 that consist of electrically conductive ring shaped members are provided at the rear end of the shaft 23. Brushes 28 stay in sliding contact with these slip rings 27 as the shaft 23 rotates. These brushes 28 are electrically connected to the field winding 13 of the rotor 19, and operate to supply electrical power from the field control device 3 to the field winding 13.

The stator 18 upon which the armature winding 12 is wound is fixed to the internal circumferential interior of the cylindrical center bracket 20 by being pressed thereinto, or the like. And the front bracket 24 is fixed by bolts to the front end surface of the center bracket 20.

A coolant conduit 37 in which cooling water from the engine flows is formed in the interior cylindrical surface of the center bracket 20. The rear plate 36 is fixed by bolts to the rear of the center bracket 20, so as to close this cooling water coolant conduit 37. A rubber gasket is provided between the center bracket 20 and the rear plate 36, and ensures the integrity of the coolant conduit 37. Due to the center bracket 20 and the rear plate 36 being cooled by the cooling water in the coolant conduit 37, the armature winding of the stator 18 that is fixed to the inner circumferential surface of the center bracket 20 and the full-wave rectifier 2 and the control device assembly 31 that are provided so as to contact the rear plate 36 are cooled.

Fig. 3 is a circuit diagram showing the charging system of the AC generator 1. The full-wave rectifier 2 is a bridge rectifier of circuit that includes a total of 6 power MOS FETs 8 and 9; it has three series circuits connected in parallel, each including a high side MOS FET 8 and a low side MOS FET 9 connected in series. An output terminal that corresponds to one of the phases of the armature winding 12 is connected to each of the three points at which a high side MOS FET 8 and a low side MOS FET 9 are connected together in series. The drain terminal of each of the high side MOS FETs 8 is connected to the positive electrode of a battery 6 of the vehicle, while the source terminal of each of the low side MOS FETs 9 is connected to the negative electrode of the battery 6. Moreover, each of the terminals of the armature winding 12 is connected to one of the input terminals of the MOS FET control device 4, so that the MOS FET control device 4 can detect the voltage at that output terminal (i.e. its phase voltage). Furthermore, in this embodiment, load circuits 10 and 11 are provided between the gates and sources of the MOS FETs 8 and 9, and this feature is different from the case of a prior art device. These load circuits 10 and 11 will be described hereinafter.

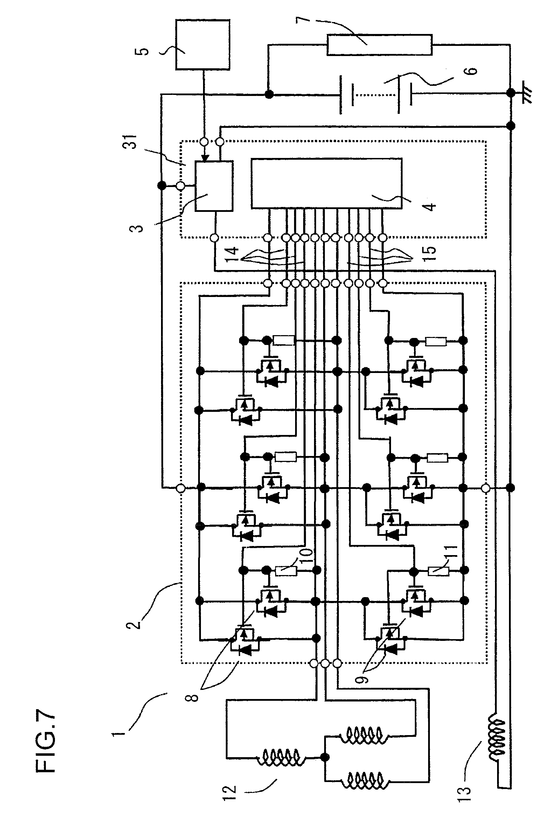

It should be understood that while, with the structure for the full-wave rectifier 2 shown in Fig. 3, a single MOS FET element is provided for the high side and the low side of each phase, it would also be acceptable to provide a plurality of such MOS FET elements in parallel, as shown in Fig. 7 in which two MOS FET elements are provided in parallel for each of the high side and the low side of each phase. In this case, it is sufficient to provide a single load circuit 10, 11 for each of these pluralities of MOS FET elements that are connected in parallel. Of course it would also be acceptable to provide an individual load circuit 10, 11 for each of the MOS FET elements.

The turning ON and OFF of each of the MOS FETs 8 and 9 is controlled by the MOS FET control device 4 that is provided to the control device assembly 31. The reference symbols 14 and 15 are gate drive signal lines, and each of these connects a rectifier side signal terminal 40 that is provided to the full-wave rectifier 2 and a control side signal terminal 30 that is provided to the control device assembly 31. The MOS FET control device 4 supplies gate drive signals to the MOS FETs 8 and 9 on the basis of the phase voltages generated by the armature windings 12, thus turning the MOS FETs 8 and 9 ON and OFF. The AC electrical power that is output by the armature windings 12 is full wave rectified into DC electrical power, and this is supplied to the battery 6 and a load device 7. The load device 7 is an item of onboard auxiliary machinery mounted to the vehicle, such as a lighting system or an air conditioner or the like.

The field control device 3 controls the field electrical power supplied to the field winding 13, according to a requested electrical power command related to the load device 7 that is sent from a vehicle side command control device 5. Due to this, the amount of AC electrical power that is output from the armature winding 12 is adjusted.

The full-wave rectifier 2 is raised to a comparatively high temperature, due to generation of heat by the MOS FETs 8 and 9. Because of this, in order for the control device assembly 31 to avoid being affected by this heat generation, it is mounted in a separate chassis from that of the full-wave rectifier 2. For this reason, a construction is adopted in which the rectifier side signal terminals 40 of the full-wave rectifier 2 and the control side signal terminals 30 of the control device assembly 31 are connected together by the gate drive signal lines 14 and 15.

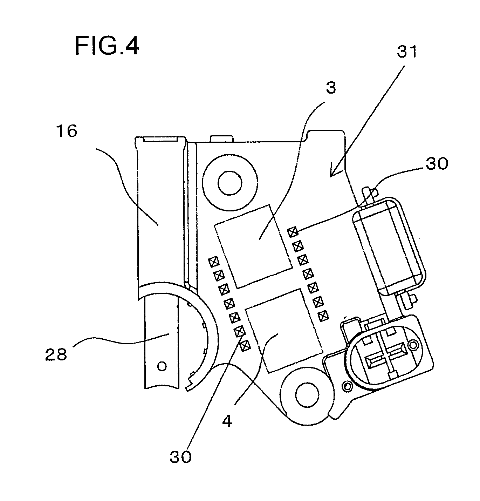

Figs. 4 through 6 are figures showing the way in which the full-wave rectifier 2 and the control device assembly 31 are arranged. As shown in Fig. 2, the full-wave rectifier 2 and the control device assembly 31 are fixed to the rear plate 36 that is fixed to the rear side of the center bracket 20. The rear plate 36 is cooled by the cooling water that flows in the coolant conduit 37. Thus, the heat that is generated by the full-wave rectifier 2 and the control device assembly 31 is dissipated to the cooling water via the rear plate 36.

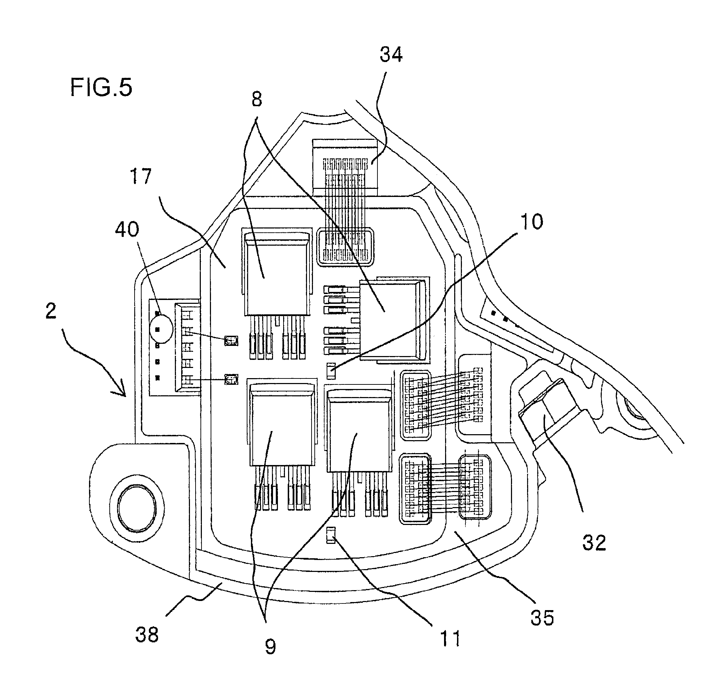

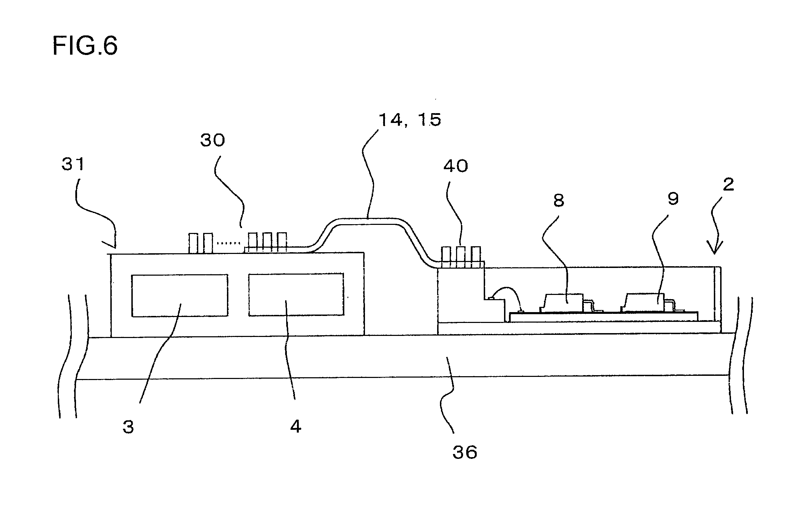

Fig. 4 is a figure showing the control device assembly 31 as seen from the side of the cover 26. Fig. 5 is a figure showing a portion of the full-wave rectifier 2 as seen from the side of the cover 26, and shows the structure of a module for one of the phases. And Fig. 6 is a sectional view showing the way in which the gate drive signal lines 14 and 15 are connected between the full-wave rectifier 2 and the control device assembly 31 that are fixed upon the rear plate 36.

In Fig. 4, the reference symbol 16 denotes a brush holder in which the brushes 28 are mounted (only one of which can be seen in the figure). The field control device 3 and the MOS FET control device 4 are mounted upon the same chassis as this brush holder 16. And control side signal terminals 30 for the field control device 3 and the MOS FET control device 4 are provided upon the outer surface of this chassis.

As shown in Fig. 5 (refer also to Fig. 2), the full-wave rectifier 2 includes an aluminum plate 35 that is fixed by bolts upon the rear plate 36, and a metal substrate 17 that is fixed by adhesive to the aluminum plate 35. A mold case 38 made from resin is provided upon the aluminum plate 35 so as to surround the metal substrate 17. Cu (copper) wiring patterns are laid out upon the metal substrate 17, over an insulating layer. The high side MOS FETs 8 and the low side MOS FETs 9 are mounted upon these Cu wiring patterns with solder. It should be understood that, in Fig. 5, a configuration is shown that applies to the example whose circuit diagram is shown in Fig. 7, in which two of each of the MOS FETs 8 and 9 are provided, connected in parallel.

Into the mold case 38, there are molded lead wire terminals 32 and B terminal bus bars 34, to which B terminals 33 that are terminals for connection with the battery 6 are fixed by press insertion. Lead wires by which the phase voltages are output from the armature windings 12 are connected to the lead wire terminals 32.

The drain terminals of the high side MOS FETs 8 are fixed by solder to a Cu pattern upon the metal substrate 17. This Cu pattern is electrically connected to the B terminal bus bars 34 by aluminum wire bonding. Furthermore, the source terminals of the low side MOS FETs 9 are fixed by solder to another Cu pattern upon the metal substrate 17. This Cu pattern is electrically connected to the aluminum plate 35 by aluminum wire bonding.

Upon the metal substrate 17 there are further disposed resistors constituting load circuits 10 that are provided between the gates and the sources of the high side MOS FETs 8, and resistors constituting load circuits 11 that are provided between the gates and the sources of the low side MOS FETs 8. And the aluminum plate 35 is connected to ground via the rear plate 36, the center bracket 20, and the engine 101.

Furthermore, the source terminals of the high side MOS FETs 8 and the drain terminals of the low side MOS FETs 9 that are connected in series are connected by the lead wire terminals 32 to lead wires, to which the phase voltages from the armature windings 12 are output. Molding resin 39 is charged into the mold case 38 so as to cover over all of the metal substrate 17, the MOS FETs 8 and 9, the aluminum wire bonding, and so on.

Fig. 6 is a sectional view of the full-wave rectifier 2 and the control device assembly 31 that are fixed upon the rear plate 36. The control side signal terminals 30 are provided upon the outer surface of the control device assembly 31, so as to be exposed. In a similar manner, the rectifier side signal terminals 40 of the full-wave rectifier 2 that are electrically connected to the gate terminals of the MOS FETs 8 and 9 are provided upon the upper surface of the full-wave rectifier 2, so as to be exposed. And these control side signal terminals 30 and rectifier side signal terminals 40 are connected together by the gate drive signal lines 14 and 15 that are made as FPCs (flexible printed circuits).

It should be understood that it would also be acceptable to use bus bars made from Cu (copper) or Al (aluminum) for the gate drive signal lines 14 and 15. Moreover, it would be possible to utilize connection by connectors, connection by wire bonding, connection by screw fixing, or welding as the method for connecting the gate drive signal lines 14 and 15 and the rectifier side signal terminals 40 and the control side signal terminals 30.

Next, the operation of the MOS FETs during charging will be explained in a simple manner. When the rotor 19 rotates in the state in which a field current is being supplied to the field winding 13, induced electromotive forces are generated in the armature winding 12, and three-phase induction voltages are generated between the three terminals of the armature winding 12. For example, in the state in which the U phase output terminal goes to high voltage and the V phase output terminal goes to low voltage and the voltage between the U phase and the V phase becomes high and becomes greater than the voltage of the battery 6, the MOS FET control device 4 supplies gate voltage to the gate terminal of the high side MOS FET 8 in the high voltage side series circuit to which the U phase output terminal is connected, and thus performs control so that a current flows from its source terminal in the direction of the drain terminal. Furthermore, the MOS FET control device 4 supplies gate voltage to the gate terminal of the low side MOS FET 9 in the low voltage side series circuit to which the V phase output terminal is connected, and thus perform control so than a current flows from its source terminal in the direction of its drain terminal. As a result, the battery 6 is charged up.

On the other hand, in the converse state in which the V phase output terminal goes to high voltage and the U phase output terminal goes to low voltage and the voltage between the V phase and the U phase becomes high and becomes greater than the voltage of the battery 6, the MOS FET control device 4 performs the converse control action, so that the MOS FET 8 of the high side series circuit to which the V phase output terminal is connected and the MOS FET 9 of the low side series circuit to which the U phase terminal is connected are put to ON, so that, again, the battery 6 is charged up. Similar operation is performed for the VW phase and for the WU phase, so that three phase full wave rectification operation is performed.

Thus, in this way, during the rectification operation, only one or the other of the high side MOS FET 8 and the low side MOS FET 9 is operated to be ON. Now, as described above, there is a fear that, due to vibration or the like, the contacting of one of the gate drive signal lines 14 or 15 connecting the MOS FET control device 4 and the gate terminals of the full-wave rectifier 2 may fail, or that one of these gate drive signal lines may break.

For example, if one of the gate drive signal lines 14 for one of the high side MOS FETs 8 should break, then the gate voltage of that MOS FET 8 will go into the unstable (i.e. floating) state. Since this MOS FET 8 has a certain gate capacitance, if the gate drive signal line 14 should break when a gate voltage is being applied and this MOS FET 8 is in the ON state, then there is a fear that the charge accumulated in this gate capacitance may remain, so that the MOS FET 8 will stay in the ON state. In this type of situation, when the corresponding MOS FET 9 on the low side goes to ON, a short circuit current will flow from the battery 6, and there is a danger of the MOS FETs becoming damaged.

Due to this, in this embodiment of the present invention, by providing the load circuits 10 and 11 between the gates and the sources of the MOS FETs 8 and 9 as described above, it is arranged to bleed down such an electric charge remaining in the gate capacitance of one of the MOS FETs 8 or 9 when its corresponding gate drive signal line breaks, via the corresponding load circuit 10 or 11. Since, as a result, the electrical potential on the gate of this MOS FET is brought to be the same potential as that of its source, it is possible to prevent this MOS FET from remaining in the ON state due to its gate voltage being floating, so that it is possible reliably to ensure that this MOS FET is OFF, and it becomes possible to change over to rectification by a parasitic diode.

It should be understood that, if the load circuits 10 and 11 consist of resistors, then it is desirable for the resistance value R of these resistors to be set in the following manner. The considerations when setting the resistance value R are as follows. (1) Since the magnitude of the resistance value R exerts an influence upon the time constant τ when the gate signal goes ON and OFF according to the equation τ = R•Cg, accordingly the upper limit value for the resistance value R should be set sufficiently low for the time constant to become suitable for tracking the turning ON and OFF of the MOS FETs 8 and 9 in response to the ON and OFF control commands from the MOS FET control device 4. (2) Moreover, since when a gate voltage is applied a current flows in the load circuit (resistor) 10 or 11, the lower limit value for the resistance value R should be set so that the loss at this time is as small as possible.

With regard to the time constant τ, since the MOS FETs 8 and 9 go to ON and OFF as the phase voltages go positive and negative, it is necessary for τ to be less than or equal to half of the period of the phase voltage cycles. Furthermore, since generally such a vehicle AC generator 1 is required to be able to endure a rotational speed of 20,000 rpm, accordingly here the resistance value R should be set so that the time constant τ becomes less than half the period of the phase voltage cycles at a rotational speed of 20,000 rpm (i.e. at this maximum demanded rotational speed).

On the other hand, with regard to the maximum permitted value for the losses, it is necessary, at least, to keep these losses smaller than the reduction in losses due to the fact that the rectifier elements have been changed from diodes to MOS FETs. If the current flowing in the rectifier elements is termed I and the drops in voltage due to diodes and MOS FETs are respectively termed ΔVd and ΔVm, then the amount of loss decrease ΔW due to the replacement of a single one of the rectifier elements by a MOS FET is given by ΔW = I•(ΔVd-ΔVm). Considering this loss decrease ΔW as being the maximum permitted loss, it is necessary to set the value of the resistance R so that RI² < ΔW Accordingly, if the gate voltage of the MOS FETs is termed Vg, then the resistance value R of the load circuits 10 and 11 is set so as to satisfy R > V_{g}²/ΔW.

Furthermore, to take the leak current in the IC or the like as a criterion, it would also be acceptable to set the resistance value R so that the current flowing in the resistor is less than some standard leak current. As for the gate voltage V_{g} in this case, for example, the maximum permitted value for the loss may be set by setting the resistance value R while taking, within various types of MOS FET that are used in vehicle AC generators, the type whose gate voltage is the lowest as a reference.

For example, consider a two pole AC generator whose phase voltage frequency is 2,000 Hz when its rotational speed is 20,000 rpm. In this case, since half a period is 0.25 ms, the time constant τ is set so that τ < 0.25 ms. In the case of a high current flow type MOS FET used in a rectifier of such a vehicular alternator in which a current of around 180 A flows, the gate capacitance Cg is around 5,000 pF - 20,000 pF. Here, since in the equation for the time constant τ = R•C_{g} an upper limit value for the resistance value R is being considered, the lowest end of the range of values for the gate capacitance Cg is used, i.e. 5,000 pF. In this case, the resistance value R is set so that R < 0.25 ms / 5,000 pF; that is, the upper limit value Rₘₐₓ becomes equal to 50 kΩ.

On the other hand, the lower limit value Rₘᵢₙ of the resistance value R is derived by consideration of the amount of loss reduction ΔW that is obtained when the rectifier elements are changed from diodes to MOS FETs. If the output current of this vehicle AC generator 1 is 120 A, and if as shown in Fig. 7 two each of the MOS FETs 8 and 9 are connected in parallel, then the effective value of the current that flows in each element is around 40 A. Moreover, if it is supposed that the ON resistance for each of the MOS FETs 8 and 9 is 3 mΩ, then the voltage drop when a current of 40 A flows is 0.12 V. Thus since, when a current I of 40 A flows in the rectifier element, the voltage drop ΔVd in the case of a diode is around 1.0 V while the voltage drop ΔVm in the case of a MOS FET is 0.12 V, the magnitude of the reduction in loss ΔW is around 35.2 W Taking this amount ΔW of loss reduction as the maximum permitted loss Wₘₐₓ, if the gate voltage of the MOS FET is termed Vg, then R > V_{g}²/Wₘₐₓ = V_{g}²/35.2. In other words, if the lower limit value Rₘᵢₙ for the resistance value R is determined from the amount of loss reduction ΔW, then, if the above described value of 50 kΩ is used for the upper limit value Rₘₐₓ, the resistance value R should be set so that V_{g}²/Wₘₐₓ(Ω) < R < 50 kΩ. Accordingly, the resistance value R may be permitted to become quite small.

Furthermore, if for example 5 V is employed as the gate voltage Vg of the MOS FETs, and the standard for the leak current is taken as being 10 mA, then it is necessary to set the resistance value R so that R>500 Ω, in order for the current that flows in the load circuits 10 and 11 to be less than 10 mA. In other words, the lower limit value Rₘᵢₙ for the resistance value R becomes 500 Ω. And, if the upper limit value Rₘₐₓ is taken as being 50 kΩ as described above, then the final condition for the resistance value R is that it should be set so that 500 Ω < R < 50 kΩ.

It should be understood that although, in the above described example of calculation, the upper limit value of Rₘₐₓ was calculated using a value for the gate capacitance Cg of 5,000 pF, in the case of a circuit structure that can cope with MOS FETs such as those that have a gate capacitance Cg in the range of 5,000 pF - 20,000 pF or the like, it would also be acceptable to utilize the resistance value of R = 25 kΩ that is calculated for Cg = 20,000 pF as the upper limit value of Rₘₐₓ.

As has been explained above, in this embodiment, it is arranged to connect the load circuits 10 and 11 between the gates and the sources of the MOS FETs 8 and 9 that are provided to the full-wave rectifier 2 as rectifier elements, for bleeding down electric charges that may be accumulated in the gate capacitances of these MOS FETs 8 and 9 if one of the gate drive signal lines breaks. Due to this provision, even if one of the gate drive signal lines should become broken or otherwise interrupted, it becomes possible for the gate terminal of the corresponding MOS FET 8 or 9 to be brought to the same electrical potential as its source terminal, so that this MOS FET 8 or 9 goes to OFF. As a result, it is possible to prevent destruction of one or more of the MOS FETs 8 and 9 taking place due to a short circuit occurring because of a high side MOS FET 8 and the corresponding low side MOS FET 9 both being ON simultaneously. Furthermore, since it is still possible to perform full wave rectification with the parasitic diode within the MOS FET even if one of the MOS FETs 8 or 9 is turned OFF, accordingly it becomes possible for the electrical generation operation of this vehicular alternator to continue, and it becomes possible to continue normal travelling even with this vehicle.

By setting the resistance value of the resistors that constitute the load circuits 10 and 11 so that the time constant that is defined as the product of this resistance value and the gate capacitance of the MOS FETs 8 and 9 is smaller than half the period of the phase voltage cycle when this vehicular alternator is rotating at its maximum demanded rotational speed, and moreover so that the losses in the resistors when drive signals are being applied is less than the predetermined maximum permitted loss, it is possible to ensure that the MOS FETs track the ON and OFF switching commands supplied to them, while at the same time suppressing losses in the resistors to the maximum possible degree.

It would be acceptable to utilize the embodiments described above singly or in combination. This is because the beneficial effects of each embodiment may be reaped either singly or synergistically. Furthermore, the present invention is not to be considered as being particularly limited by any of the embodiments described above, provided that its special characteristics are preserved.

## Claims

1. A rectifier of vehicular alternator that rectifies AC electrical power into DC electrical power, comprising:
a rectifier (110) that includes a plurality of MOS FETs (8, 9) that are used as rectifier elements;
a control circuit that applies drive signals to the gates of the plurality of MOS FETs (8, 9) via gate drive signal lines (14, 15), and that thereby commands continuity and discontinuity of the plurality of MOS FETs (8, 9); and
a plurality of load circuits (10, 11), one connected between the gate and the source of each of the MOS FETs (8, 9), for bleeding down electric charge accumulated by gate capacitance of the MOS FET (8, 9) if the gate drive signal line (14, 15) is interrupted.

2. A rectifier of vehicular alternator according to Claim 1, wherein:
each of the load circuits (10, 11) comprises a resistor; and
the resistance values of the resistors are set so that the time constants that are defined by the products of the resistance values of the resistors and the gate capacitances of their corresponding MOS FETs (8, 9) are smaller than half the period of the phase voltage cycles when the vehicle AC generator (1) is rotating at its maximum rotational speed, and moreover so that the loss in each of the resistors when the drive signal is applied is less than a predetermined maximum permitted loss.

3. A rectifier of vehicular alternator according to Claim 2, wherein:
the predetermined maximum permitted loss is the difference between the rectification loss when diodes are used as the rectifier elements, and the rectification loss when MOS FETs (8, 9) are used as the rectifier elements.

4. A rectifier of vehicular alternator according to Claim 2 or 3, wherein:
the resistance values of the resistors are set so as to satisfy 500Ω<R<50kΩ.

5. A vehicular alternator, comprising:
a rectifier according to at least one of claims 1 to 4;
a stator (18) upon which an armature winding (12) is provided;
a rotor (19) upon which a field winding (13) is provided;
a bracket (20) fixed to the vehicle, for supporting the stator (18) and the rotor (19);
a first cabinet that is fixed to the bracket (20), to which the rectifier (110) and gate drive signal input terminals (14, 15) are provided; and
a second cabinet that is fixed to the bracket (20), to which the control circuit and gate drive signal output terminals are provided, wherein:
the gate drive signal input terminals and the gate drive signal output terminals are connected together by the gate drive signal lines (14, 15).
